# EUROPÄISCHE PATENTSCHRIFT

(11) **EP 1 107 874 B1**
(45) Veröffentlichungstag und Bekanntmachung des Hinweises auf die Patenterteilung: **30.10.2002**
(21) Anmeldenummer: 99968225.5
(22) Anmeldetag: 01.09.1999
(51) Int. Cl.: B60J 7/00, B60P 7/04

(54) **PLANENAUFBAU**
TARPAULIN STRUCTURE
STRUCTURE DE BACHE

(30) Priorität: 01.09.1998 DE 19839775
(43) Veröffentlichungstag der Anmeldung: 20.06.2001
(73) Patentinhaber: Edscha LKW-Schiebeverdecke GmbH, 42855 Remscheid (DE)
(72) Erfinder: FLIEGE, Dieter, D-42855 Remscheid (DE); REMMEL, Roger, D-42879 Remscheid (DE); DRASCH, Josef, D-94577 Winzer (DE)
(74) Vertreter: Sparing, Rolf Klaus
(86) Internationale Anmeldenummer: DE9902821
(87) Internationale Veröffentlichungsnummer: WO00012334

(56) Entgegenhaltungen:
- EP-A- 0 459 879
- WO-A-97/32745
- CH-A- 136 218
- FR-A- 2 162 703

## Beschreibung

Die Erfindung betrifft einen Planenaufbau nach dem Oberbegriff des Anspruchs 1.

EP-A-0 459 879 zeigt ein Fahrzeugaufbau mit einer Mehrzahl von Spriegeln, die an oberen Längsgurten des Aufbaus verlagerbar sind, auf welchen Spriegeln eine Plane angeordnet ist, wobei die Spriegel mit Nietbolzen mit einem Rollenwagen verbunden sind.

WO-A-97 32 745 zeigt eine Öffnungseinrichtung zum Öffnen eines Containers, der über eine Plane verschlossen ist, die über Spriegel, die an horizontalen Längsträgern verlagerbar sind, verschoben werden kann. Die Spriegel, die aus einem Rechteckprofil hergestellt sind, sind an einer abgewinkelten Verlängerung einer Kante dieses Profils mit einer Achse für eine Rolle verbunden.

CH-A-136 218 beschreibt ein Verdeck, bei dem die die Verdeckplane abstützenden Spriegel entlang beider Verdecklängsseiten über durch Längenabschnitte eines flachen Bandmaterials aus einem halbstarren Material gebildete und im wesentlichen deckungsgleich zu den oberen Längsgurten des Verdeckgestells angeordnete Auflageelemente für die Dachplane untereinander verbunden sind, wobei die Bandmaterialabschnitte an ihren beiden Enden jeweils mittels Nieten an benachbarten Spriegeln unlösbar befestigt und mit vorgezeichneten Gelenklinien ausgestattet sind. Bei Zusammenschieben des Verdecks klappen infolge der Abstandsverringerung zwischen benachbarten Spriegeln die Bandmaterialabschnitte nach oben und bewirken damit eine Faltung der Verdeckplane. Die Gelenklinien der Auflageelemente sind dabei zueinander parallel und senkrecht zur Längserstreckung der oberen Längsgurte des Verdeckgestells ausgerichtet. Für die Herstellung einer Verbindung der aus einem halbstarren Material gebildeten Auflageelemente mit den Spriegeln ist ein erheblicher technischer und wirtschaftlicher Aufwand erforderlich.

FR-A-2 162 703 beschreibt ein zusamenschiebbares Verdeck für Kraftfahrzeuge, bei dem zum Beheben des Problems eines Schleifens oder Einklemmens der Dachplane an den oberen Längsgurten des Verdeckgestells vorgeschlagen wird, an den Verdeckseitenbereichen zugeordneten und nach unten gerichteten Abwinkelungen der Spriegel ein Band aus einem halbstarren Material zu befestigen, welches bei einem Zusammenschieben des Verdecks einen nach außen gerichteten Faltenwurf der Verdeckplane erzwingt und damit eine Beschädigung der Plane beim Öffnen und Schließen des Verdeckes ausschließen soll. Für die Herstellung einer Verbindung der aus einem halbstarren Material gebildeten Auflageelemente mit den Spriegeln ist ein erheblicher technischer und wirtschaftlicher Aufwand erforderlich.

Gemäß einem älteren, nicht vorveröffentlichten Vorschlag der Anmelderin ist angeregt worden, die aus einem halbstarren Material bestehenden Auflageelemente mittels Halteblechen und Niete nicht an den Spriegeln, sondern an den die Spriegel an den Längsgurten des Verdeckgestells abstützenden, ihrerseits als besondere Teile aufwendig herzustellenden Rollenwagen bleibend zu befestigen. Zur Entlastung der die Auflageelemente mit den Spriegeln verbindenden Befestigungsmittel, insbesondere Niete, sind den Stirnenden der Auflageelemente quer zu deren Längserstreckung ausgerichtete Widerlager an jedem Spriegel zugeordnet, so daß die sich aus den Durchbiegungen der Auflageelemente beim Öffnen und Schließen des Verdecks ergebenden Zug- und Druckkräfte von den Widerlagern aufgenommen und dadurch die Befestigungsmittel von solchen Kräften freigehalten werden, um ein Ausreißen der Auflageelemente im Bereich der Befestigungsmittel zu verhindern.

Es ist die Aufgabe der Erfindung, einen Planenaufbau nach dem Oberbegriff des Anspruchs 1 vorzuschlagen, der eine einfache Verbindung der Auflageelemente mit den Spriegeln bzw. mit den Rollenwagen ermöglicht.

Diese Aufgabe wird bei dem eingangs genannten Planenaufbau erfindungsgemäß mit den kennzeichnenden Merkmalen des Anspruch 1 gelöst.

Die erfindungsgemäße ausschließliche Verbindung aller Teile eines Spriegels und zugleich auch der Auflageelemente über formschlüssigen Eingriff gewährleistet den Verzicht auf als Einzelteile einzusetzende, durchgehende Befestigungsmittel wie Schrauben oder Niete und führt zu einer Verringerung des erforderlichen Herstellungsaufwandes. Hierdurch wird die Herstellung der Spriegel insgesamt verbilligt. Zudem führt die erfindungsgemäß auf besondere Befestigungsmittel verzichtende Ausbildung von Spriegel und Rollenwagen sowie Auflageelemente zu einer Verringerung der insgesamt erforderlichen Einzelteile bei gleichzeitig vorteilhaft gegebener Möglichkeit zum Ausgleich unterschiedlicher Spriegellängen. Ferner schafft die formschlüssige Verbindung des Rollenwagen mit den Auflageelementen einerseits und mit den Spriegelschäften andererseits eine mit geringem Aufwand demontierbare Verbindung, die einen schnellen Austausch des Rollenwagens zuläßt, wenn beispielsweise ein Lagerschaden der Stützrolle dies erfordert. Die nicht schadhaften Teile können dann wiederverwertet werden.

In einer bevorzugten Ausführungsform eines mit einem durch einen einfachen Hohlprofilabschnitt gebildeten Schaftteil eines Spriegels verbindbaren Rollenwagens ist vorgesehen, daß das Chassis der Rollenwagen zweiteilig ausgebildet ist und daß die beiden Teile eines Rollenwagens durch gegenseitigen formschlüssigen Eingriff miteinander verbunden sind. Der eine Teil ist hierbei zum Umgreifen des oberen Längsgurtes ausgebildet, und insbesondere mit Rollen für die Verlagerung entlang von in dem Längsgurt vorgesehener Laufschienen ausgebildet. Der andere Teil dient der Verbindung mit dem Schaftteil des Spriegels, und eines der beiden Teile oder beide gemeinsam halten vorzugsweise die Enden der Auflageelemente.

In einer zweckmäßigen Gestaltung ist vorgesehen, daß ein erstes Teil des Rollenwagenchassis durch einen die Laufschiene des oberen Längsgurts des Verdeckgestells bügelartig umgreifenden und die Stütz- sowie die Führungsrollen des Rollenwagen tragendes Blechformteil und ein zweites Teil des Rollenwagenchassis durch ein mit seinen freien Enden das erste Teil des Rollenwagens teilweise und zangenförmig umgreifendes und mit einem in der horizontalen Projektion U-förmig gestalteten Eingriffsbereich in das Hohlprofil des Spriegelschafts eingreifendes Blechfaltteil gebildet ist. Eine ausschließlich formschlüssige Verbindung zunächst der beiden Teile des Rollenwagenchassis wird vorteilhaft dadurch erreicht, daß das zangenförmig umgreifende Blechfaltteil mit einem ersten Arm den Profilgrund und mit einem zweiten Arm den bezüglich des Verdecks innenliegenden Schenkel des bügelförmigen ersten Teils des Rollenwagenchassis übergreift. Ein einfacher Zusammenbau und leichte erneute Demontierbarkeit ist vorzugsweise dadurch gewährleistet, daß das zangenförmig umgreifende Blechfaltteil an den freien Enden seiner beiden Arme jeweils mit einer Randumbiegung versehen ist, die in entsprechend ausgebildete Schlitze oder Vorsprünge des ersten Teils eingreifen. Hierbei kann durch Verbiegen des zweiten Teils der formschlüssige Eingriff wieder aufgehoben werden.

Vorzugsweise greift das zweite Teil mit seiner am ersten Arm angeordneten Randumbiegung in eine Schlitzausnehmung im Profilgrund des bügelförmigen ersten Teiles des Rollenwagenchassis ein, während seine an seinem zweiten Arm angeordnete Randumbiegung die freie Kante des bezüglich des Verdecks innen liegenden Schenkels des bügelförmigen ersten Teils des Rollenwagenchassis umgreift. Da das zangenförmige zweite Teil des Rollenwagenchassis einerseits als Blechfaltteil ausgebildet und damit wenigstens in seinem U-förmigen Eingriffsbereich in einem gewissen Umfang federnd ausgebildet ist, werden die beiden das bügelförmige erste Teil teilweise umgreifenden Arme des zweiten Teils beim Einführen seines Eingriffsbereichs in das den Schaftteil des Spriegels bildenden Hohlprofilabschnitt zwangsweise aufeinander zu bewegt und damit der formschlüssige Eingriff der Randumbiegungen der freien Enden seiner beiden Arme mit den Gegenformen am ersten bügelförmigen Teil des Rollenwagenchassis gesichert.

Zweckmäßigerweise ist zur formschlüssigen Verbindung der Tragteile der Abstützung für die Plane eines Planenaufbaus ferner vorgesehen, daß die benachbarten Spriegel bzw. Rollenwagen untereinander verbindenden, jeweils aus einem Steifen eines halbstarren Materials bestehenden Auflageelemente mit ihren Endbereichen jeweils über einen Teil dessen Breite und Länge hin auf dem bügelförmigen ersten Teil des Rollenwagenchassis aufliegen und sowohl in Längsrichtung wie auch in Querrichtung des Rollenwagenchassis an nach oben ausgebogenen Bereichen des Profilgrundes des bügelförmigen ersten Teiles des Rollenwagenchassis abgestützt sind. Bei Verlagerung der Rollenwagen, die eine Verringerung des Abstands zweier Rollenwagen bewirkt, wird das zwischen den beiden Rollenwagen vorgesehene und an diesen gehaltene Auflageelement zusammen mit der darauf abgelegten Plane 5 nach oben gebogen.

Die Sicherung einer ordnungsgemäßen gegenseitigen Anlage von Auflageelementen und Rollenwagenchassis erfolgt vorzugsweise dadurch, daß die auf dem Profilgrund des bügelförmigen ersten Teiles des Rollenwagenchassis aufliegenden Endbereiche der aus Streifen eines halbstarren Materials bestehenden Auflageelemente von dem ersten Arm des zangenförmig umgreifenden Blechfaltteils übergriffen sind. Außer einer formschlüssigen Abstützung in Längs- und Querrichtung und einer Einspannung durch den ersten Arm des zangenförmig umgreifenden Blechfaltteils ist es bezüglich der Verbindung der Auflageelemente mit den Spriegeln bzw. Rollenwagen zusätzlich möglich, die aus Streifen eines halbstarren Materials bestehenden Auflageelemente vermittels in ihren auf dem Profilgrund des bügelförmigen ersten Teiles des Rollenwagenchassis aufliegenden Endbereichen ausgebildeter Ausnehmungen mit komplementär gestalteten, im Profilgrund des bügelförmigen ersten Teiles des Rollenwagenchassis ausgeschnittenen und nach oben ausgestellten Freischnitren im formschlüssigen Eingriff zu bringen. Hierbei kann wahlweise mit den Freischnitten nur ein Auflageelement oder wahlweise auch eine Ausnehmung in dem ersten Arm des zweiten Teils durchsetzt werden.

Insgesamt zielt die vorstehend dargestellte Verbindungsweise der Auflageelemente mit den Rollenwagen darauf ab, daß einerseits die in den auf dem Profilgrund des bügelförmigen ersten Teiles des Rollenwagenchassis aufliegenden Endbereichen der Auflageelemente vorgesehenen Ausnehmungen mit nach oben ausgestellten Freischnitten des Profilgrundes des bügelförmigen ersten Teiles des Rollenwagenchassis und andererseits die Längs- und Querrandbereiche der auf dem Profilgrund des bügelförmigen ersten Teiles des Rollenwagenchassis aufliegenden Endbereiche der Auflageelemente sowohl in Längsrichtung wie auch in Querrichtung des Rollenwagenchassis an den nach oben aus gebogenen Bereichen des Profilgrundes des bügelförmigen ersten Teiles des Rollenwagenchassis vermittels des sie übergreifenden ersten Armes des zangenförmig umgreifenden Blechfaltteils gleichzeitig und zwangsweise im formschlüssigen Eingriff gehalten sind.

Zur Herstellung einer Verbindung zwischen Rollenwagen und den Schaftteil eines Spriegels bildendem Hohlprofilabschnitt ist vorzugsweise vorgesehen, daß der in der horizontalen Projektion U-förmig gestaltete Eingriffsbereich des zum Beipsiel durch ein zangenartiges Blechfaltteil gebildeten zweiten Teiles des Rollenwagenchassis in seiner Eingriffslage im Hohlprofil des Spriegelschafts vermittels eines Federsteckers oder eines einfachen Stifts gesichert ist, welcher mit seinem Steckerstift gleichzeitig eine Ausnehmung in wenigstens einer den Bereich zwischen den beiden Profilschenkeln des Eingriffsbereiches mindestens teilweise übergreifenden Abwinkelung des einen Profilschenkels des Eingriffsbereichs und Bohrungsausnehmungen in den einander gegenüberliegenden Profilwandungen des den Schaftteil des Spriegels bildenden Hohlprofils durchgreift. Diese Steckverbindung schafft einen zuverlässigen Formschluß, und kann darüber hinaus leicht wieder aufgelöst werden.

Vorzugsweise ist in dem den Spriegelschaft bildenden Längenabschnitt eines Hohlprofils in dessen Längsrichtung aufeinanderfolgend eine Vielzahl von einem Federstecker oder Stift zugeordneten Bohrungsausnehmungen vorgesehen. Aus dieser bevorzugten Ausführung der Verbindung der Rollenwagen mit dem den Schaftteil des Spriegels bildenden Hohlprofil eröffnet sich die Möglichkeit, die Rollenwagen in einer solchen Weise mit dem Schaftteil des Spriegels zu verbinden, daß die Rollenwagen mit unterschiedlichen Abständen zu deren Enden an dem den Spriegelschaftteil bildenden Hohlprofilabschnitt befestigt werden können und somit bei Verwendung eines einheitlichen Längenzuschnittes eines Hohlprofilmaterials und gleichermaßen einheitlich ausgebildeten Rollenwagen Spriegel für unterschiedliche Breiten von Planenverdecken erstellt werden können.

Weitere Vorteile und Merkmale der Erfindung ergeben sich aus der nachfolgenden Beschreibung sowie aus den Unteransprüchen.

Die Erfindung wird nachstehend unter Bezugnahme auf die anliegenden Zeichnungen anhand eines bevorzugten Ausführungsbeispiels näher erläutert.
Fig. 1 zeigt eine perspektivische Ansicht eines mit einem faltbaren Ausführungsbeispiel eines erfindungsgemäßen Planenaufbaus ausgestatteten Nutzfahrzeugs.
Fig. 2 zeigt ausschnittweise eine Draufsicht auf einen Spriegel des Planenaufbaus aus Fig. 1 sowie auf den Spriegel mit benachbarten Spriegeln verbindende Auflageelemente und auf einen die Auflageelemente mit dem Spriegel verbindenden Rollenwagen.
Fig. 3 zeigt einen Längsschnitt durch die Baueinheit aus Rollenwagen und Spriegel aus Fig. 2.
Fig. 4 zeigt einen Querschnitt durch den Rollenwagen entlang der Linie IV-IV in Fig. 3.
Fig. 5 zeigt einen Querschnitt durch den Verbindungsbereich zwischen Rollenwagen und Spriegel entlang der Linie V-V in Fig. 3.

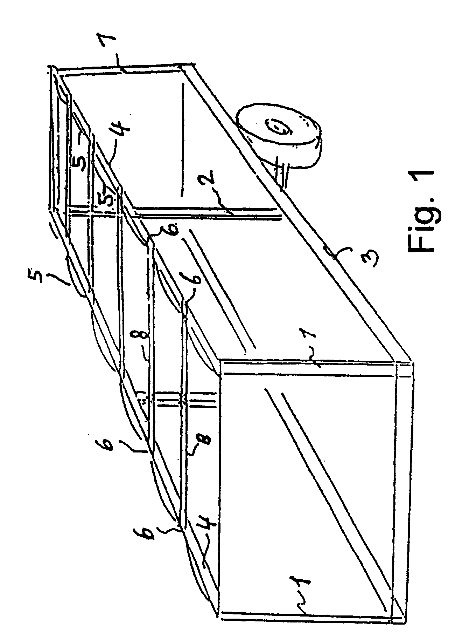

Der in Fig. 1 schematisch dargestellte, faltbare Planenaufbau umfaßt unter anderem ein Verdeckgestell mit die Laderaumlänge überspannenden, über aufragenden Stützen 1 und Rungen 2 gegen ein mit 3 bezeichnetes Fahrzeugchassis abgestützten oberen Längsgurten 4, bei dem eine mindestens den Dachbereich des Verdecks übergreifende Plane 5 von die Ladeflächenbreite überspannenden und vermittels Rollenwagen 6 in Fahrzeuglängsrichtung verschieblich an den Längsgurten 4 des Verdeckgestells abgestützten Spriegeln 8 getragen ist. Die Rollenwagen 6 einander benachbarter Spriegel 8 sind im Bereich beider Verdecklängsseiten jeweils mittels eines aus einem halbstarren Material bestehenden Auflageelementes 9 für die Plane 5 derart untereinander verbunden, daß eine Verringerung des Abstandes zwischen zwei benachbarten Spriegeln 8 bzw. Rollenwagen 6 in diesem Bereich zu einer nach oben gerichteten Faltung der Plane 5 führt.

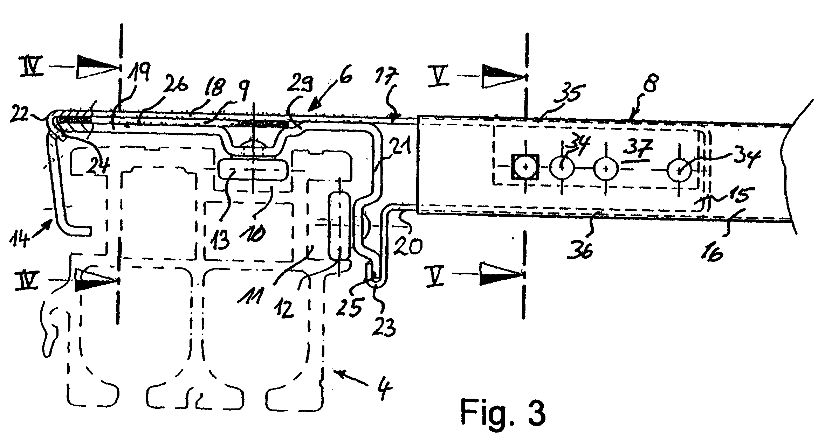

Der Chassis der Rollenwagen 6 ist jeweils zweiteilig ausgeführt und besteht, wie in Fig. 3 besonders gut zu erkennen, aus einem ersten, Laufschienen 10 und 11 des oberen Längsgurts 4 des Verdeckgestells bügelartig umgreifenden und die Stützrollen 12 und die Führungsrollen 13 des Rollenwagens 6 tragenden, als Blechformteil ausgebildeten Teil 14 und einem zweiten, mit seinen freien Enden das erste Teil 14 teilweise und zangenförmig umgreifenden und mit einem in der horizontalen Projektion U-förmig gestalteten Eingriffsbereich 15 in das Hohlprofil 16 des Spriegelschafts 8 eingreifendes Blechfaltteil 17.

Das zangenförmige Blechfaltteil 17 übergreift mit einem ersten Arm 18 einen Profilgrund 19 und mit einem zweiten Arm 20 den bezüglich des Verdecks innen liegenden Schenkel 21 des bügelförmigen ersten Teils 14 des Rollenwagenchassis. Das zangenförmige Blechfaltteil 17 ist an den freien Enden seiner beiden Arme 18 und 20 jeweils mit einer Randumbiegung 22 bzw. 23 versehen und greift mit seiner am ersten Arm 18 angeordneten Randumbiegung 22 in eine Schlitzausnehmung 24 im Profilgrund 19 des bügelförmigen ersten Teils 14 des Rollenwagenchassis ein. Mit einer an seinem zweiten Arm 20 angeordneten Randumbiegung 23 umgreift das zangenförmige Blechfaltteil 17 des Rollenwagenchassis die freie Kante 25 des bezüglich des Verdecks innen liegenden Schenkels 21 des bügelförmigen ersten Teils 14 des Rollenwagenchassis.

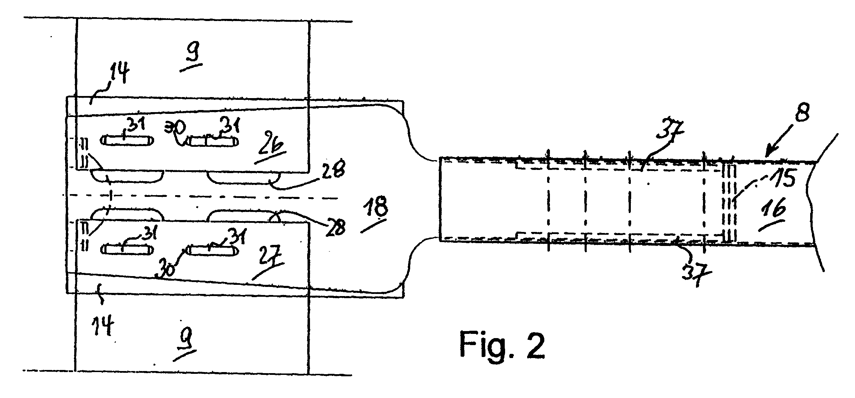

Die benachbarte Spriegel 8 bzw. Rollenwagen 6 untereinander verbindenden, jeweils aus einem Streifen eines halbstarren Materials bestehenden Auflageelemente 9 liegen, wie in Fig. 2 gut zu erkennen, mit ihren Endbereichen 26 und 27 jeweils über einen Teil dessen Breite und Länge auf dem Profilgrund 19 des bügelförmigen ersten Teils 14 des Rollenwagenchassis auf und sind in Längsrichtung an nach oben ausgebogenen Bereichen 28 des Profilgrundes 19 abgestützt. In Querrichtung des Rollenwagenchassis sind die Endbereiche 26 und 27 über eine Schulter 29 des Profilgrundes 19 abgestützt. Die auf dem Profilgrund 19 aufliegenden Endbereiche 26 und 27 sind von dem ersten Arm 18 des zangenförmig umgreifenden Blechfaltteils 17 übergriffen. Die Auflageelemente 9 sind in ihren auf dem Profilgrund 19 aufliegenden Endbereichen 26 und 27 zusätzlich mit Ausnehmungen 30 versehen, mit welchen sich komplementär gestaltete, im Profilgrund 19 ausgeschnittenen und nach oben ausgestellten Freischnitten 31 im formschlüssigen Eingriff befinden. Somit sind die in den auf dem Profilgrund 19 des bügelförmigen ersten Teils 14 aufliegenden Endbereichen 26 und 27 vorgesehenen Ausnehmungen 30 einerseits mit nach oben ausgestellten Freischnitten 31 des Profilgrundes 19 und andererseits die Längs- und Querrandbereiche der auf dem Profilgrund 19 aufliegenden Endbereiche 26 und 27 sowohl in Längsrichtung wie auch in Querrichtung des Rollenwagenchassis an den nach oben ausgebogenen Bereichen 28 und 29 des Profilgrundes 19 vermittels des sie übergreifenden ersten Arms 18 des zangenförmig umgreifenden Blechfaltteils 17 gleichzeitig und zwangsweise im formschlüssigen Eingriff gehalten. Die Auflageelemente 9 können auch eine oder zwei Gelenklinien aufweisen, die eine Unterstützung beim Klappen der Plane nach oben liefern.

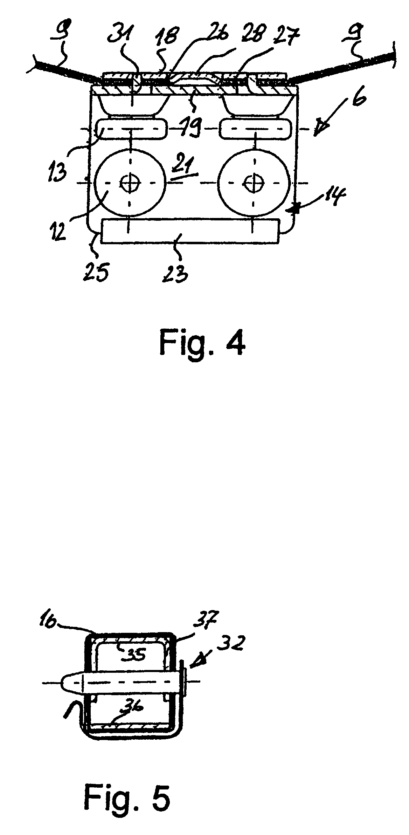

Der in der horizontalen Projektion U-förmig gestaltete Eingriffsbereich 15 des durch ein zangenartiges Blechfaltteil gebildeten zweiten Teils 17 des Rollenwagenchassis ist, wie in Fig. 5 gut zu erkennen, in seiner Eingriffslage im Hohlprofil 16 des Spriegelschafts 8 vermittels eines Federsteckers 32 gesichert, wobei der Federstecker 32 mit seinem Steckerstift 33 gleichzeitig eine Ausnehmung 34 in den Bereich zwischen den beiden Profilschenkeln 35 und 36 des Eingriffsbereiches 15 teilweise übergreifenden Abwinkelungen 37 des einen Profilschenkels 35 des Eingriffsbereiches 15 und Bohrungsausnehmungen in den einander gegenüberliegenden Profilwandungen des den Schaftteil des Spriegels 8 bildenden Hohlprofils 16 durchgreift. Die senkrecht zum oberen Profilschenkel 35 des U-förmigen Eingriffsbereiches 15 abgestellten, den Bereich zwischen den beiden Profilschenkeln 35 und 36 des Eingriffsbereichs 15 teilweise übergreifenden Abwinkelungen 37 sind vorteilhaft mit einer Vielzahl in Reihe hintereinander liegend angeordneter Ausnehmungen 34 ausgestattet, um die Rollenwagen 6 mit unterschiedlichen Abständen zu deren Enden an dem den Spriegelschaftteil bildenden Hohlprofilabschnitt 16 befestigen zu können.

## Patentansprüche

1. Planenaufbau für Fahrzeugaufbauten und Container, mit einem die Laderaumlänge überspannenden, über aufragende Stützen (1) gegen das Fahrzeugchassis (3) abgestützte obere Längsgurte (4) aufweisenden Verdeckgestell, bei dem eine mindestens den Dachbereich des Verdecks übergreifende Plane (5) von beidendig vermittels Rollenwagen (6) in Fahrzeuglängsrichtung verschieblich an den Längsgurten (4) des Verdeckgestells abgestützten Spriegeln (8) getragen ist und bei dem einander benachbarte Spriegel (8) im Bereich beider Verdecklängsseiten jeweils mittels eines Auflageelements (9) für die Plane (5) derart untereinander verbunden sind, daß eine Verringerung des Abstands zwischen zwei benachbarten Spriegeln (8) zwischen den benachbarten Spriegeln (8) zu einer nach oben gerichteten Faltung der Plane (5) führt,
**dadurch gekennzeichnet,**
**daß** die Rollenwagen (6) einerseits mit den Auflageelementen (9) für die Plane (5) und andererseits mit Spriegelschäften der Spriegel (8) ausschließlich über gegenseitigen formschlüssigen Eingriff verbunden sind.

2. Planenaufbau nach Anspruch 1, **dadurch gekennzeichnet, daß** das Chassis des Rollenwagen (6) zweiteilig ausgebildet ist und daß die beiden Teile (14, 17) des Chassis des Rollenwagens (6) durch gegenseitigen formschlüssigen Eingriff miteinander verbunden sind.

3. Planenaufbau nach Anspruch 2, **dadurch gekennzeichnet, daß** ein erstes Teil (14) des Rollenwagenchassis durch einen eine Laufschiene (10, 11) des oberen Längsgurtes (4) des Verdeckgestells bügelartig umgreifenden und Stützrollen (12) und Führungsrollen (13) des Rollenwagen (6) tragendes Blechformteil und ein zweites Teil (17) des Rollenwagenchassis durch ein mit seinen freien Enden (18, 20) das erste Teil (14) des Rollenwagens teilweise und zangenförmig umgreifendes und mit einem in der horizontalen Projektion U-förmig gestalteten Eingriffsbereich (15) in ein Hohlprofil (16) des Spriegelschafts eingreifendes Blechfaltteil gebildet ist.

4. Planenaufbau nach Anspruch 3, **dadurch gekennzeichnet, daß** das zangenförmig umgreifende Blechfaltteil (17) mit einem ersten Arm (18) den Profilgrund (19) und mit einem zweiten Arm (20) den bezüglich des Verdecks innen liegenden Schenkel (21) des bügelförmigen ersten Teils (14) des Rollenwagenchassis übergreift.

5. Planenaufbau nach Anspruch 4, **dadurch gekennzeichnet, daß** das zangenförmig umgreifende Blechfaltteil (17) an den freien Enden seiner beiden Arme (18, 20) jeweils mit einer Randumbiegung (22, 23) versehen ist und mit seiner am ersten Arm (18) angeordneten Randumbiegung (22) in eine Schlitzausnehmung (24) im Profilgrund (19) des bügelförmigen ersten Teils (14) eingreift und mit seiner am seinem zweiten Arm (20) angeordneten Randumbiegung (23) die freie Kante (25) des bezüglich des Verdecks innen liegenden Schenkels des bügelförmigen ersten Teils (14) des Rollenwagenchassis umgreift.

6. Planenaufbau nach einem der Ansprüche 1 bis 5, **dadurch gekennzeichnet, daß** die benachbarte Spriegel (8) bzw. Rollenwagen (6) untereinander verbindenden, jeweils aus einem Streifen eines halbstarren Materials bestehenden Auflageelemente (9) mit ihren Endbereichen (26, 27) jeweils zum Teil auf dem bügelförmigen ersten Teil (14) des Rollenwagenchassis aufliegen und wenigstens in Längsrichtung des Rollenwagenchassis an nach oben ausgebogenen Bereichen (28) des Profilgrundes (19) des ersten Teils (14) abgestützt sind.

7. Planenaufbau nach Anspruch 6, **dadurch gekennzeichnet, daß** die auf dem Profilgrund (19) aufliegenden Endbereiche (26, 27) der Auflageelemente (9) von dem ersten Arm (18) des zangenförmig umgreifenden Blechfaltteils (17) übergriffen sind.

8. Planenaufbau nach Anspruch 7, **dadurch gekennzeichnet, daß** die Auflageelemente (9) vermittels in ihren auf dem Profilgrund (19) aufliegenden Endbereichen (26, 27) ausgebildeter Ausnehmungen (30) mit komplementär gestalteten, im Profilgrund (19) ausgeschnittenen und nach oben ausgestellten Freischnitten (31) in formschlüssigen Eingriff stehen.

9. Planenaufbau nach Anspruch 8, **dadurch gekennzeichnet, daß** die Längs- und Querrandbereiche der auf dem Profilgrund (19) des ersten Teils (14) aufliegenden Endbereiche (26, 27) der Auflageelemente (9) sowohl in Längsrichtung wie auch in Querrichtung des Rollenwagenchassis an den nach oben ausgebogenen Bereichen des Profilgrundes (19) vermittels des sie übergreifenden ersten Arms (18) des Blechfaltteils (17) gleichzeitig und zwangsweise im formschlüssigen Eingriff gehalten sind.

10. Planenaufbau nach einem der Ansprüche 3 bis 9, **dadurch gekennzeichnet, daß** der in der horizontalen Projektion U-förmig gestaltete Eingriffsbereich (15) des durch ein zangenartiges Blechfaltteil gebildeten zweiten Teils (17) des Rollenwagenchassis in seiner Eingriffslage im Hohlprofil (16) des Spriegelschafts vermittels eines Federsteckers (32) gesichert ist, welcher mit seinem Steckerstift (33) gleichzeitig eine Ausnehmung (34) in wenigstens einer den Bereich zwischen zwei Profilschenkeln (35, 36) des Eingriffsbereichs (15) mindestens teilweise übergreifenden Abwinkelung (37) des einen Profilschenkels (35) des Eingriffsbereichs und Bohrungsausnehmungen (34) in den einander gegenüberliegenden Profilwandungen des den Schaftteil des Spriegels (8) bildenden Hohlprofils (16) durchgreift.

11. Planenaufbau nach einem der Ansprüche 1 bis 10, **dadurch gekennzeichnet, daß** in dem den Spriegelschaft bildenden Längenabschnitt eines Hohlprofils in dessen Längsrichtung aufeinanderfolgend eine Vielzahl von einem Federstecker (32) zugeordneten Bohrungsausnehmungen (34) vorgesehen ist.

12. Planenaufbau nach einem der Ansprüche 1 bis 11, **dadurch gekennzeichnet, daß** die Auflageelemente (9) um wenigstens eine festgelegte Gelenklinie klappbar sind.

## Claims

1. Tarpaulin structure for vehicle bodies and containers, having a folding-top frame which covers the length of the loading compartment having upper longitudinal flanges (4) supported on the vehicle chassis (3) via protruding supports (1), wherein a tarpaulin (5), which at least fits over the roof region of the folding top, is supported by bows (8) which are supported at both ends by means of roller carriages (6) in a manner allowing them to be displaced in the longitudinal direction of the vehicle on the longitudinal flanges (4) of the folding-top frame, and wherein mutually adjacent bows (8) are connected to one another in the region of both longitudinal sides of the folding top in each case by means of a bearing element (9) for the tarpaulin (5) in such a manner that a reduction in the distance between two adjacent bows (8) results in an upwardly directed folding of the tarpaulin (5) between the adjacent bows (8),
**characterized in**
**that** the roller carriages (6) are connected at one end to the bearing elements (9) for the tarpaulin (5) and at the other end to bow shafts of the bows (8) exclusively via mutual, form-locking engagement.

2. Tarpaulin structure according to claim 1, **characterized in that** the chassis of the roller carriage (6) is of two-part design, and that the two parts (14, 17) of the chassis of the roller carriage (6) are connected to each other by a mutual, form-locking engagement.

3. Tarpaulin structure according to claim 2, **characterized in that** a first part (14) of the roller-carriage chassis is formed by a sheet-metal shaped part which grips like a bracket around a runner (10, 11) of the upper longitudinal flange (4) of the folding-top frame and supports supporting rollers (12) and guide rollers (13) of the roller carriage (6), and a second part (17) of the roller-carriage chassis is formed by a sheet-metal folded part which grips, by means of its free ends (18, 20), in a partial and tongs-like manner around the first part (14) of the roller carriage and engages, by means of an engagement region (15) of U-shaped configuration in horizontal projection, in a hollow profile (16) of the bow shaft.

4. Tarpaulin structure according to claim 3, **characterized in that** the sheet-metal folded part (17) which grips around in a tongs-like manner grips with a first arm (18) over the profiled base (19) and with a second arm (20) over the limb (21), which lies on the inside with respect to the folding top, of the bracket-shaped, first part (14) of the roller-carriage chassis.

5. Tarpaulin structure according to claim 4, **characterized in that** the sheet-metal folded part (17) which grips around in a tongs-like manner is provided at the free ends of its two arms (18, 20) with a respective bent-over edge (22, 23) and engages with its bent-over edge (22), which is arranged on the first arm (18), in a slotted recess (24) in the profiled base (19) of the bracket-shaped first part (14) and with its bent-over edge (23), which is arranged on its second arm (20), grips around the free edge (25) of the limb, which lies on the inside with respect to the folding top, of the bracket-shaped, first part (14) of the roller-carriage chassis.

6. Tarpaulin structure according to one of claims 1 to 5, **characterized in that** bearing elements (9) which connect the adjacent bows (8) and roller carriages (6) to one another and consist in each case of a strip of semirigid material rest with their end regions (26, 27) in each case partially on the bracket-shaped, first part (14) of the roller-carriage chassis and, at least in the longitudinal direction of the roller-carriage chassis, are supported on regions (28), which are bent out upwards, of the profiled base (19) of the first part (14).

7. Tarpaulin structure according to claim 6, **characterized in that** those end regions (26, 27) of the bearing elements (9) which rest on the profiled base (19) are gripped over by the first arm (18) of the sheet-metal folded part (17) which grips around in a tongs-like manner.

8. Tarpaulin structure according to claim 7, **characterized in that** the bearing elements (9) are in form-locking engagement, by means of recesses (30) formed in their end regions (26, 27) resting on the profiled base (19), with reliefs (31) which are of complementary configuration and are cut out from the profiled based (19) and point upwards.

9. Tarpaulin structure according to claim 8, **characterized in that** the longitudinal and transverse edge regions of those end regions (26, 27) of the bearing elements (9) which rest on the profiled base (19) of the first part (14) are simultaneously and forcibly held in form-locking engagement, both in the longitudinal direction and in the transverse direction of the roller-carriage chassis, on those regions of the profiled base (19) which are bent out upwards by means of the first arm (18) of the sheet-metal folded part (17), which arm grips over the said regions.

10. Tarpaulin structure according to one of claims 3 to 9, **characterized in that** the engagement region (15), which is of U-shaped configuration in horizontal projection, of the second part (17), formed by a tongs-like sheet-metal folded part, of the roller-carriage chassis is secured in its engagement position in the hollow profile (16) of the bow shaft by means of a spring plug (32) which grips, by means of its plug pin (33), simultaneously through a recess (34) in at least one angled portion (37) of the one profiled limb (35) of the engagement region, which angled portion at least partially grips over the region between two profiled limbs (35, 36) of the engagement region (15), and through hole recesses (34) in the mutually opposite profiled walls of the hollow profile (16) forming the shaft part of the bow (8).

11. Tarpaulin structure according to one of claims 1 to 10, **characterized in that** a multiplicity of hole recesses (34) assigned to a spring plug (32) is provided **in that** longitudinal section of a hollow profile which forms the bow shaft, successively in the longitudinal direction thereof.

12. Tarpaulin structure according to one of claims 1 to 11, **characterized in that** the bearing elements (9) can be folded around at least one predetermined line of articulation.

## Revendications

1. Construction de bâche pour carrosseries de véhicules et conteneurs, avec un bâti de capotage couvrant la longueur de l'espace de chargement et présentant des membrures supérieures (4) soutenues sur le châssis de véhicule (3) par l'intermédiaire d'appuis (1) montants, pour laquelle une bâche (5) entourant au moins la zone de toit de la capote, est portée, de façon mobile dans la direction longitudinale du véhicule, par des arceaux (8) soutenus aux deux extrémités sur les membrures (4) du châssis à capote par des chariots à galets (6), et pour laquelle des arceaux (8) voisins les uns des autres dans la zone des deux côtés longitudinaux de la capote, sont reliés ensemble chaque fois à l'aide d'un élément de pose (9) pour la bâche (5), la liaison étant telle qu'une diminution de l'espacement entre deux arceaux (8) voisins mène à un pliage, orienté vers le haut, de la bâche (5) entre les arceaux (8) voisins,
**caractérisée en ce que**
les chariots à galets (6) sont reliés, d'une part, aux éléments de pose (9) de la bâche (5) et, d'autre part, à des tiges d'arceaux appartenant aux arceaux (8), exclusivement par l'intermédiaire d'une mise en prise mutuelle faisant appel à une liaison à ajustement de forme.

2. Construction de bâche selon la revendication 1, **caractérisée en ce que** le châssis du chariot à galets (6) est réalisé en deux parties et **en ce que** les deux parties (14, 17) du châssis du chariot à galets (6) sont reliées ensemble par l'intermédiaire d'une mise en prise mutuelle faisant appel à une liaison à ajustement de forme.

3. Construction de bâche selon la revendication 2, **caractérisée en ce que** une première partie (14) du châssis du chariot à galets est formée par une pièce façonnée en tôle entourant à la façon d'un étrier une glissière (10, 11) de la membrure supérieure (4) du bâti de capotage et portant des galets d'appui (12) et des galets de guidage (13) du chariot à galets (6), et **en ce que** une deuxième partie (17) du châssis du chariot à galets est formée par une pièce pliée en tôle entourant partiellement à la façon d'une pince par ses extrémités libres (18, 20) la première partie (14) du chariot à galets et s'engageant, par une zone d'emprise (15) en forme de U si on l'observe en projection horizontale, dans un profilé creux (16) de la tige d'arceau.

4. Construction de bâche selon la revendication 3, **caractérisée en ce que** la pièce pliée en tôle (17) entourant à la façon d'une pince, entoure par un premier bras (18), le fond de profil (19) et, par un deuxième bras (20), la branche (21) de la première partie (14) en forme d'étrier du châssis du chariot à galets placée intérieurement par rapport à la capote.

5. Construction de bâche selon la revendication 4, **caractérisée en ce que** la pièce pliée en tôle (17) entourant à la façon d'une pince, est munie sur les extrémités libres de chacun de ses deux bras (18, 20) d'un repli de bordure (22, 23) et s'engage par son repli de bordure (22) disposé sur le premier bras (18) dans un évidement en forme de fente (24) ménagé dans le fond de profil (19) de la première partie (14) en forme d'étrier et entoure par son repli de bordure (23) disposé sur son deuxième bras (20) le bord (25) libre de la branche de la première partie (14) en forme d'étrier du châssis du chariot à galets située à l'intérieur par rapport à la capote.

6. Construction de bâche selon l'une des revendications 1 à 5, **caractérisée en ce que** les éléments de pose (9) reliant ensemble les arceaux (8) ou les chariots à galets (6) voisins, chacun formé d'une bande d'un matériau semi-rigide, reposent respectivement par leurs zones d'extrémité (26, 27) en partie sur la première partie (14) en forme d'étrier du châssis du chariot à galets et sont soutenus au moins dans la direction longitudinale du châssis du chariot à galets sur des zones (28) pliées vers le haut du fond de profil (19) de la première partie (14).

7. Construction de bâche selon la revendication 6, **caractérisée en ce que** les zones d'extrémité (26, 27) des éléments de pose (9) reposant sur le fond de profil (19) sont entourées par le premier bras (18) de la pièce pliée en tôle (17) entourant à la façon d'une pince.

8. Construction de bâche selon la revendication 7, **caractérisée en ce que** les éléments de pose (9) sont en prise par une liaison à ajustement de forme, au moyen d'évidements (30) réalisés dans leurs zones d'extrémité (26, 27) reposant sur le fond de profil (19), avec des découpes libres (31) de forme complémentaire obtenues par découpage dans le fond de profil (19) et orientées vers le haut.

9. Construction de bâche selon la revendication 8, **caractérisée en ce que** les zones de bordure longitudinales et transversales des zones d'extrémité (26, 27) des éléments de pose (9) reposant sur le fond de profil (19) de la première partie (14) sont maintenues simultanément et de façon contrainte, tant en direction longitudinale qu'également en direction transversale du châssis de chariot à galets, sur les zones pliées vers le haut du fond de profil (19) au moyen du premier bras (18) les entourant de la pièce pliée en tôle (17) par une liaison à ajustement à forme.

10. Construction de bâche selon l'une des revendications 3 à 9, **caractérisée en ce que** la zone d'emprise (15) en forme de U en projection horizontale de la deuxième partie (17) formée par une pièce pliée en tôle du genre d'une pince du châssis du chariot à galets est assurée dans sa position d'emprise dans le profilée creux (16) de la tige d'arceau au moyen d'une goupille à montage élastique (32) qui, avec sa tige de goupille (33), traverse simultanément un évidement (34) ménagé dans au moins un coude (37) d'une branche de profil (35) de la zone d'emprise entourant au moins partiellement la zone située entre deux branches de profil (35, 36) de la zone d'emprise (15), et des évidements de perçage (34) ménagés dans les parois de profil placées les unes en face des autres du profilé creux (16) formant la partie de tige de l'arceau (8).

11. Construction de bâche selon l'une des revendications 1 à 10, **caractérisée en ce que** dans le tronçon de longueur formant la tige d'arceau d'un profilé creux est prévue une pluralité d'évidements de perçage (34), associés à une goupille à montage élastique (32), placés les uns à la suite des autres dans sa direction longitudinale.

12. Construction de bâche selon l'une des revendications 1 à 11, **caractérisée en ce que** les éléments de pose (9) sont rabattables autour d'au moins une ligne d'articulation fixée.
